# EUROPEAN PATENT APPLICATION

(11) **EP 4 454 908 A2**
(43) Date of publication of application: **30.10.2024**
(21) Application number: 24167037.1
(22) Date of filing: 27.03.2024
(51) Int. Cl.: B60H 1/00, B60H 1/26, B60H 1/30

(54) **AIR DISTRIBUTOR FOR TRANSPORT REFRIGERATION UNIT OF A VEHICLE**

(30) Priority: 06.04.2023 US 202363494691 P
(71) Applicant: Carrier Corporation, Palm Beach Gardens, FL 33418 (US)
(72) Inventor: SCARCELLA, Jason, East Syracuse, 13057 (US)
(74) Representative: Dehns

(57) **Abstract**

An air distributor (200) for a transport refrigeration unit, TRU, (112) associated with a vehicle (100) is disclosed. The air distributor is adapted to be removably or fixedly attached at a predetermined position on one or more truck wings (110) associated with the vehicle such that the air distributor facilitates the inflow of ambient air therewithin and directs the ambient air towards an air inlet area of a heat exchanger (114) associated with the TRU.

## Description

### CROSS-REFERENCE TO RELATED APPLICATION

This patent application claims the benefit of US Provisional Patent Application No. 63/494,691, filed on Apr 6, 2023, which is incorporated by reference herein in its entirety.

### BACKGROUND

This invention relates to transport refrigeration units, and more particularly, to an air distributor and a method for diverting and distributing ambient air towards an air inlet area of a heat exchanger associated with a transport refrigeration unit installed in a vehicle.

A transport refrigeration unit (TRU) is a refrigeration system that may be installed in a goods transportation vehicle that may have a storage compartment or trailer attached to a rear end of a truck or tractor. The TRU may maintain a specific temperature range or conditioned environment for transporting temperature-sensitive goods in the storage compartment or trailer. Existing vehicles typically have the TRU installed in a gap between the truck and trailer, which may affect the aerodynamics of the vehicle, leading to increased fuel consumption, instability, and overall reduced efficiency. Moreover, any effort to improve the aerodynamics of such vehicles may affect the supply and distribution of clean fresh ambient air supply to the heat exchanger associated with the TRU. There is, therefore, a requirement for a solution to make the truck and trailer aerodynamic while allowing the TRU to get fresh ambient air.

### SUMMARY

A first aspect of the invention provides an air distributor for a transport refrigeration unit (TRU) associated with a vehicle. The air distributor comprises a housing defining a shape of the air distributor. The air distributor is adapted to be removably or fixedly attached at a predetermined position on one or more truck wings associated with the vehicle such that the air distributor facilitates inflow of ambient air therewithin and directs the ambient air towards an air inlet area of a heat exchanger associated with the TRU.

Optionally, the air distributor comprises at least one first opening at a front side, and an internal cavity enclosed by the housing such that upon attachment of the air distributor on the corresponding truck wing, the internal cavity fluidically connects the at least one front opening to the air inlet area of the heat exchanger.

Optionally, the air distributor comprises at least one second opening at a bottom side of the housing, the at least one second opening is fluidically connected to the at least one first opening by the internal cavity such that upon attachment of the air distributor on the corresponding truck wing, the at least one second opening fluidically connects the air distributor to the air inlet area of the heat exchanger.

Optionally, the vehicle comprises a truck, and a trailer attached to a rear side of the truck such that a gap remains therebetween, wherein the heat exchanger is installed at a front side of the trailer in the gap.

Optionally, the one or more truck wings comprises a top truck wing movably configured over a top region of the gap, and two side truck wings movably configured on two opposite lateral side regions of the gap.

Optionally, the air distributor is adapted to be attached to an exterior surface of the top truck wing of the vehicle.

Optionally, the air distributor is adapted to be attached to an exterior surface of the two side truck wings of the vehicle.

Optionally, a width of a rear side of the air distributor is substantially larger than a width of a front part of the air distributor.

Optionally, a height of a rear side of the air distributor is substantially lower than a height of a front part of the air distributor.

Optionally, the bottom side of the air distributor comprises one or more coupling elements to facilitate attachment of the air distributor on the one or more truck wings.

Optionally, the first opening of the air distributor has a predefined profile comprising one or more of oval-shaped, semi-circular-shaped, rectangular-shaped, square-shaped, inverted-U shaped, and parabolic-shaped.

A second aspect of the invention provides a vehicle equipped with a transport refrigeration unit (TRU). The vehicle comprises a truck, and a trailer attached to a rear side of the truck such that a gap remains therebetween, wherein a heat exchanger associated with the TRU is installed at a front side of the trailer within the gap. The vehicle further comprises one or more truck wings movably configured at a top region, and two lateral side regions of the gap, and an air distributor removably or fixedly attached at a predetermined position on the one or more truck wings, wherein the air distributor is adapted to facilitate inflow of ambient air therewithin and direct the ambient air towards an air inlet area of the heat exchanger.

Optionally, the air distributor comprises at least one first opening at a front side, and an internal cavity enclosed by a housing such that upon attachment of the air distributor on the corresponding truck wing, the internal cavity fluidically connects the at least one front opening to the air inlet area of the heat exchanger.

Optionally, the air distributor comprises at least second opening at a bottom side of the housing, the at least second opening is fluidically connected to the at least one first opening by the internal cavity such that upon attachment of the air distributor on the corresponding truck wing, the at least second opening fluidically connects the air distributor to the air inlet area of the heat exchanger.

Optionally, the one or more truck wings comprises a top truck wing movably configured at the top region of the gap, and two side truck wings movably configured at the two opposite lateral side regions of the gap.

Optionally, the one or more truck wings are configured to move between a deployed position where the one or more truck wings enclose the gap, and a collapsed position where the gap is at least partially exposed.

Optionally, the heat exchanger is installed in middle of the front side of the trailer within the gap.

Optionally, the air distributor is attached to an exterior surface of the top truck wing of the vehicle.

Optionally, the air distributor is attached to an exterior surface of the two side truck wings of the vehicle.

A third aspect of the invention provides a method for diverting and distributing ambient air towards an air inlet area of a heat exchanger associated with a transport refrigeration unit installed in a vehicle. The method comprising the steps of attaching an air distributor at a predetermined position on one or more truck wings associated with the vehicle, wherein the air distributor comprises at least one first opening at a front side, and an internal cavity enclosed by a housing such that upon attachment of the air distributor on the corresponding truck wing, the internal cavity fluidically connects the air inlet area of the heat exchanger to ambient.

Optionally, the method comprises the step of attaching the air distributor to an exterior surface of the top truck wing of the vehicle.

Optionally, the method comprises the step of attaching the air distributor to an exterior surface of the two side truck wings of the vehicle.

The foregoing summary is illustrative only and is not intended to be in any way limiting. In addition to the illustrative aspects, embodiments, and features described above, further aspects, embodiments, features, and techniques of the invention will become more apparent from the following description taken in conjunction with the drawings.

### BRIEF DESCRIPTION OF THE DRAWINGS

The accompanying drawings are included to provide a further understanding of the invention and are incorporated in and constitute a part of this specification. The drawings illustrate exemplary non-limiting embodiments of the invention and, together with the description, serve to explain the principles of the invention.

In the drawings, similar components and/or features may have the same reference label. Further, various components of the same type may be distinguished by following the reference label with a second label that distinguishes among the similar components. If only the first reference label is used in the specification, the description is applicable to any one of the similar components having the same first reference label irrespective of the second reference label.
FIGs. 1A and 1B illustrate exemplary views of a goods transportation vehicle equipped with a transport refrigeration unit and truck wings, where an air distributor is installed on the truck wings to distribute ambient air to the heat exchanger of the TRU.
FIGs. 2A to 2D illustrate exemplary views of an air distributor.
FIGs. 2E and 2F illustrate exemplary views of another air distributor.

### DETAILED DESCRIPTION

The following is a detailed description of embodiments of the invention depicted in the accompanying drawings. The amount of detail offered is not intended to limit the anticipated variations of embodiments; on the contrary, the intention is to cover all modifications, equivalents, and alternatives falling within the scope of the invention as defined by the appended claims.

Various terms are used herein. To the extent a term used in a claim is not defined below, it should be given the broadest definition persons in the pertinent art have given that term as reflected in printed publications and issued patents at the time of filing.

In the specification, reference may be made to the spatial relationships between various components and to the spatial orientation of various aspects of components as the devices are depicted in the attached drawings. However, as will be recognized by those skilled in the art, the components of embodiments of this invention described herein may be positioned in any desired orientation. Thus, the use of terms such as "above," "below," "upper," "lower," "first", "second" or other like terms to describe a spatial relationship between various components or to describe the spatial orientation of aspects of such components should be understood to describe a relative relationship between the components or a spatial orientation of aspects of such components.

A transport refrigeration unit (TRU) may be installed in a goods transportation vehicle to maintain a conditioned environment for transporting temperature-sensitive goods. Such vehicles include a storage compartment or trailer attached to a rear end of a truck or tractor, where the TRU may be installed in a gap between the truck and trailer, at the front side of the trailer. A heat exchanger associated with the TRU may be configured to receive ambient air and enable the TRU to supply conditioned air into the trailer to maintain a specific temperature range or conditioned environment for the temperature-sensitive goods in the trailer. However, the gap between the truck and the trailer may affect the aerodynamics of the vehicle, which may lead to increased fuel consumption, instability, and an overall reduction in efficiency.

Additionally, any effort to improve the aerodynamics of TRU-equipped vehicles may affect the supply and distribution of clean fresh ambient air supply to the heat exchanger of the TRU. For instance, truck wings may be employed in such TRU-equipped vehicles to improve aerodynamics. These truck wings are aerodynamic devices that may be installed on the truck to improve its fuel efficiency by reducing air drag. Truck wings may be mounted on the rear side of the truck around the gap, which may be operable to cover the gap between the truck and trailer once the vehicle exceeds a specific speed, thereby redirecting the airflow around the trailer, and reducing the amount of air resistance that the truck experiences as it moves through the air.

While the truck wings improve the aerodynamics of the vehicle, however, they also restrict the supply or distribution of clean ambient air to the heat exchanger of the TRU. This may affect the operation and efficiency of the heat exchanger or the TRU, thereby affecting the temperature-sensitive goods transported in the trailer. There is, therefore, a need for a solution to make the truck and trailer aerodynamic while allowing the TRU to get fresh ambient air.

Embodiments of this invention overcome the above-mentioned drawbacks, and limitations associated with goods transportation vehicles, by providing a simple, efficient, and cost-effective solution in form of an air distributor that may be easily installed over the truck wing(s) of the goods transportation vehicles to direct and distribute ambient air to a face of the heat exchanger of the TRU, without affecting the aerodynamics provided by the truck wings.

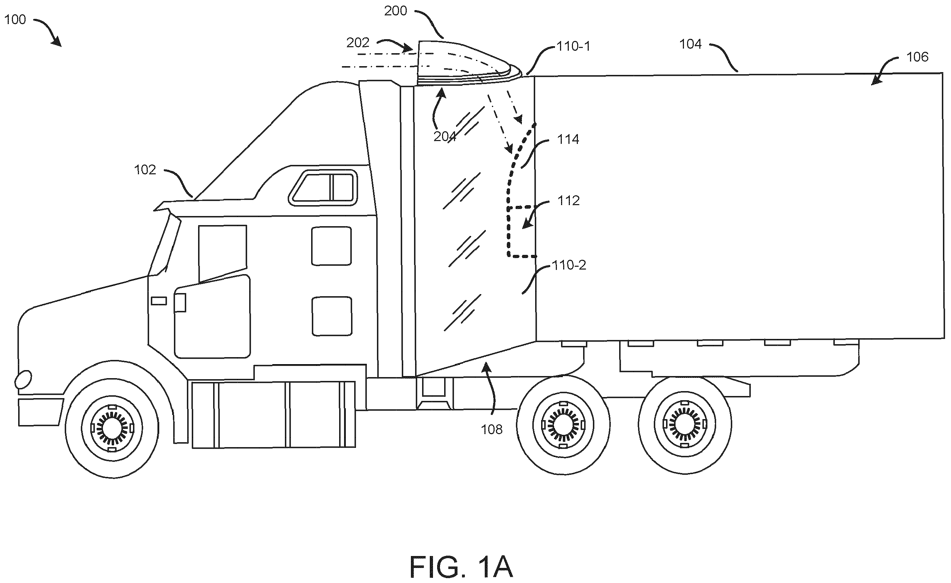

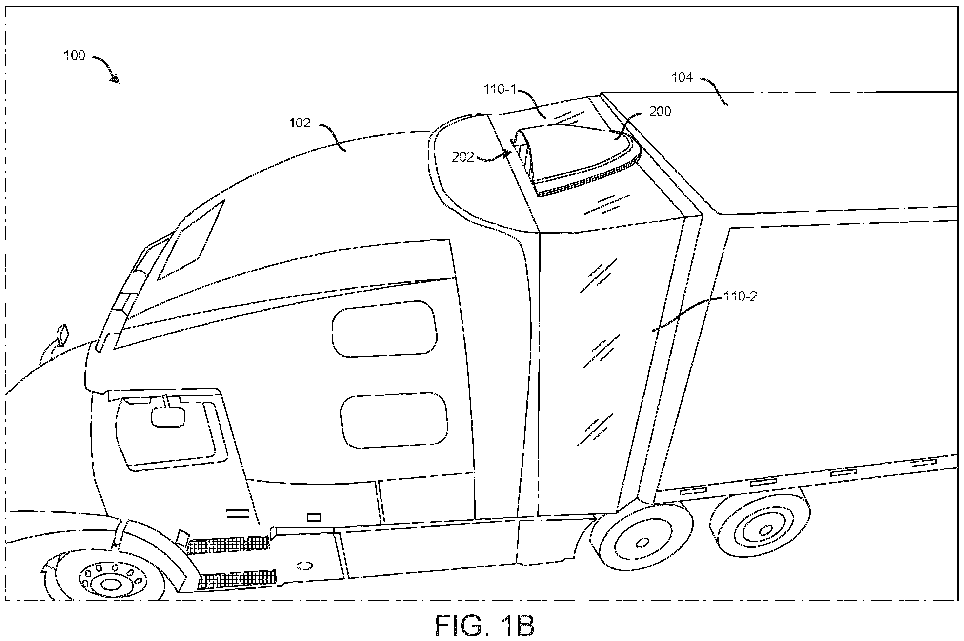

Referring to FIG. 1A and 1B, a goods transportation vehicle "vehicle" 100 equipped with a transport refrigeration unit (TRU) 112, one or more truck wings 110, and one or more air distributor(s) 200 is shown. The vehicle 100 may include a truck 102 (or a tractor), and a trailer 104 (also referred to as storage compartment or container, herein) coupled to the rear side of the truck 102. The trailer 104 may have a cargo area or storage space 106 therewithin for storing and transporting temperature-sensitive goods or products in the vehicle 100. The TRU 112 may be installed on the trailer 104 and/or truck 102 to maintain user-defined temperature or a conditioned environment within the cargo space 106 for transporting the temperature-sensitive goods. Further, a gap 108 may be provided between the truck 102 and the trailer 104 to facilitate the maneuverability of the vehicle 100 and further provide a space for installing the TRU 112 and several other components of the vehicle 100 in the gap 108 region.

In one or more embodiments, the vehicle 100 may include one or more truck wings 110-1, 110-2 (collectively designated as 110, herein) movably configured on the rear side of the truck 102, along a top region and two lateral side regions of the gap 108. In some embodiments, the truck wings 110 may also be movably configured on the front side of the trailer 104, along the top region and two lateral side regions of the gap 108, without any limitation. In other embodiments, the truck wings 110 may also be movably configured between the front side of the trailer 104 and the rear side of the truck 102, along the top region and two lateral side regions of the gap 108, without any limitation.

A first truck wing 110-1 (top truck wing 110-1) may be movably configured over the top region of the gap 108, and two second truck wings 110-2 (side truck wings 110) may be movably configured over the two opposite lateral side regions of the gap 108. The truck wings 110 may be configured to move between a deployed position where the truck wings 110 may enclose the gap 108 and a collapsed position where the gap 108 is at least partially or completely exposed. These truck wings 110 may act as aerodynamic devices that may remain in the collapsed position under normal (non-operative) conditions, while moving to the deployed position to cover the gap 108 between the truck 102 and trailer 104 when the vehicle 100 speed exceeds a predefined value (say 60 miles per hour (97 kilometers per hour), and the like), thereby redirecting the airflow around the trailer 104 and reducing the amount of air resistance that the truck 102 may experience as the vehicle 100 moves through the air. This may improve the vehicle's stability at high speed and also improve fuel efficiency by reducing air drag. However, in one or more embodiments, the truck wings 110 may be fixed to the truck 102 and/or trailer 104 in the deployed position where the gap 108 remains enclosed by the truck wings 110 irrespective of the speed of the vehicle 100 while allowing removal of the truck wings 110 by technicians and/or driver of the vehicle 100 to provide access to the gap 108 area during maintenance and replacement of the TRU 112 or other components installed in the gap 108.

The TRU 112 may include various components including but not limited to a compressor, a condenser, an evaporator, an expansion valve, and a refrigerant. The compressor may compress refrigerant gas, increasing its temperature and pressure, and circulate it through the refrigeration circuit of the TRU 112. The condenser is a heat exchanger that may remove heat from the refrigerant gas, causing it to condense into a liquid. The heat may be removed by a fan blowing air over the condenser coils. The evaporator is another heat exchanger that may absorb heat from the cargo area, causing the refrigerant liquid to evaporate into a gas. The heat may be transferred from the cargo area to the refrigerant, and then to the condenser where it is released. The expansion valve is a small device that controls the flow of refrigerant through the system. The expansion valve lowers the pressure and temperature of the refrigerant before it enters the evaporator. In one or more embodiments, the heat exchanger 114/condenser may be installed at the front side of the trailer 104, preferably in the middle of the front side, in the gap 108 such that the heat transferred from the cargo area to the condenser via the refrigerant may be exchanged with ambient air, thereby cooling the heated refrigerant and releasing heat in the ambient. As a result, the heat exchanger 114 may be supplied with cool and fresh ambient air to keep the TRU 112 operational and maintain a user-defined environment within the storage area of the trailer 104.

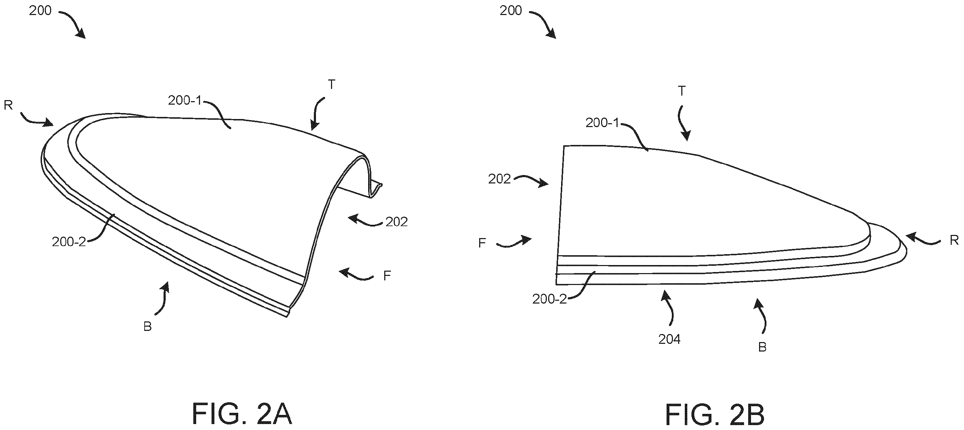

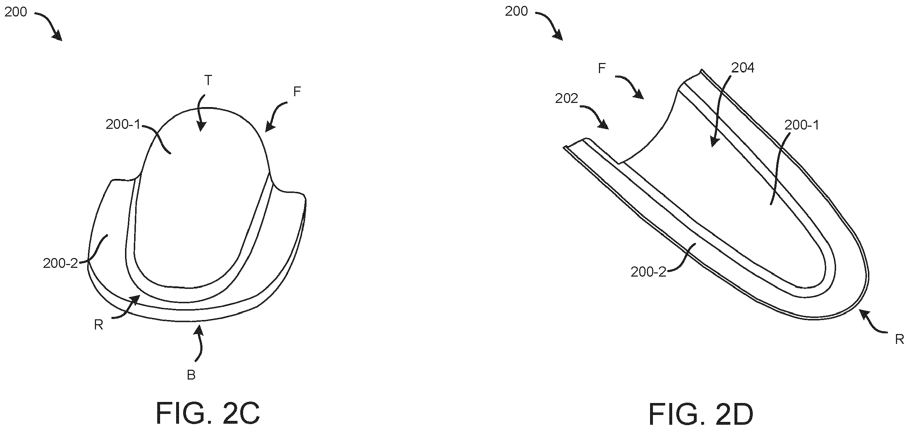

The truck wings 110 in the deployed position may enclose the gap 108 between the truck 102 and trailer 104 to improve the aerodynamics, which may also enclose the heat exchanger 114/TRU 112 installed within the gap 108 and restrict the supply of ambient air to the heat exchanger 114. However, the vehicle 100 can include the air distributor 200 removably or fixedly attached at a predetermined position on the one or more truck wings 110 to direct and distribute ambient air toward an air inlet area of the heat exchanger 114 when the truck wings 110 are in the deployed position. The constructional details and operation of the air distributor 200 have been described later in conjunction with FIGs. 2A to 2F. In one or more embodiments, the air distributor 200 may be attached to an exterior surface of the top truck wing 110-1 of the vehicle 100. Further or alternatively, air distributor 200 may also be attached to an exterior surface of at least one of the two side truck wings 110-2 of the vehicle 100.

Referring to FIG. 2A to 2F, the air distributor 200 for TRU 112 of a vehicle 100 fitted with truck wings 110 is shown. The air distributor 200 may include a housing (also designated as 200, herein) defining the shape of the air distributor 200. The air distributor 200 may be adapted to be removably or fixedly attached at a predetermined position on any or multiple truck wings 110-1, 110-2 of the vehicle 100 so that the air distributor 200 may facilitate the inflow of ambient air therewithin and further direct and distribute the ambient air towards an air inlet area of the heat exchanger 114 associated with the TRU 112. In one or more embodiments, the air distributor 200 may be attached to an exterior surface of the top truck wing 110-1 of the vehicle 100 as shown in FIGs. 1A and 1B. In some embodiments, (not shown) the air distributor 200 may be attached to an exterior surface of at least one of the two side truck wings 110-2 of the vehicle 100.

The air distributor 200 may include at least one first opening 202 (collectively referred to as inlet or front opening 202) at the front side (F), and an internal cavity or channel enclosed by the housing 200 such that upon attachment of the air distributor 200 on the corresponding truck wing 110, the internal cavity fluidically connects the front opening 202 to the air inlet area of the heat exchanger 114. The air distributor 200 may further include at least one second opening 204 (collectively referred to as an outlet or bottom opening 204) at the bottom side (B) of the housing 200. The internal cavity and bottom opening 204 may fluidically connect the front opening 202 of the air distributor 200 to the air inlet area of the heat exchanger 114 within the gap 108. In addition, the truck wings 110 may also include an opening or cut-out section (not shown) that may fluidically connect to the bottom opening 204 of the air distributor 200 upon attachment of the air distributor 200 on the corresponding truck wing 110. The profile of the opening provided on the truck wing 110 may be concurrent to the profile of the bottom opening 204 of the air distributor 200 such that upon attachment of the air distributor 200 over the opening of the truck wing 110 the ambient air may be directed toward the TRU 112 or supplied into the gap 108 only through the air distributor 200 and the remaining area of the gap 108 remains enclosed by the truck wings 110.

The housing of the distributor 200 may include a top surface 200-1 having a predefined height, length, and width on the top side (T) of the housing. The housing 200 may further include a substantially flat flange 200-2 extending along a bottom rim of the top surface 200-1 on the bottom side (B) of the housing 200. Further, the front end of the top surface T of the housing 200 may include the first/front opening 202 and the bottom side B of the housing may include the second/bottom opening 204. The flange 200-2 may be substantially parallel to the exterior surface of the truck wings 110 such that upon attachment of the air distributor 200 on the corresponding truck wing 110, the flange 200-2 remains attached to the exterior surface of the truck wings 110 and only the front opening 202 of the air distributor 200 may remain open to allow inflow of ambient air therewithin and further supply the ambient air into the gap 108 towards the heat exchanger 114.

In one or more embodiments, the flange 200-2 of the air distributor 200 and/or the exterior surface of the truck wings 110 may be configured with one or more coupling elements (not shown) that may facilitate removable coupling of the air distributor 200 on the exterior surface of the truck wings 110. In addition, fasteners may also be used to attach the air distributor 200 on the exterior surface of the truck wings 110. Further, in other embodiments, the air distributor 200 may also be welded, or otherwise permanently attached, to the exterior surface of the truck wings 110 to permanently attach the air distributor 200 to the exterior surface of the truck wings 110.

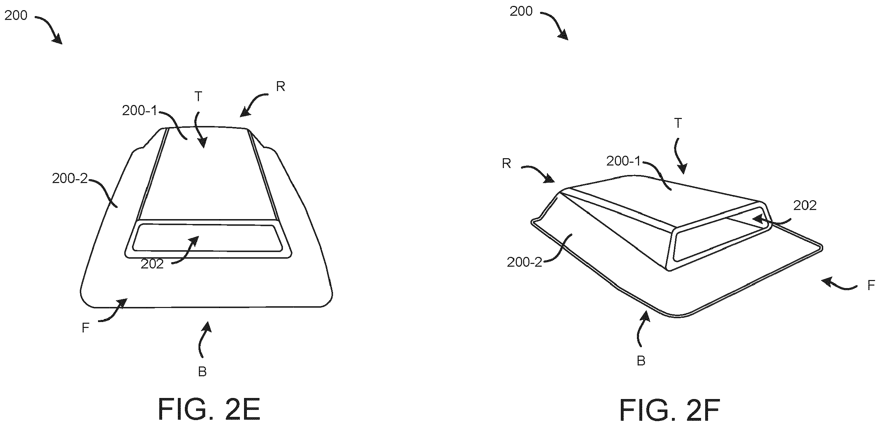

In one or more embodiments, as shown in FIGs. 2A to 2D, the top surface 200-1 of the air distributor 200 may have a curved profile. Further, in other embodiments, as shown in FIGs. 2E and 2F, the top surface 200-1 of the air distributor 200 may have a non-curved profile. However, the top surface 200-1 of the air distributor 200 may also be a combination of curved and planar surfaces defining the shape of the air distributor 200. The dimension and shape of the air distributor 200 may be selected based on the truck wing 110 selected for installing the air distributor 200 thereover, the position where the air distributor 200 is to be installed over the selected truck wings 110, the dimension of the selected truck wing 110, the gap 108 between the truck 102 and trailer 104, and height of the trailer 104 and truck 102.

Referring to FIGs. 2A to 2F, in one or more embodiments, the width of the rear portion of the air distributor 200 may be kept substantially larger than the width of the front portion of the air distributor 200, however, the width of the rear portion of the air distributor 200 may also be kept equal or substantially lesser than the width of the front portion of the air distributor 200. Further, the height of the rear portion of the air distributor 200 may be kept substantially lower than the height of the front portion of the air distributor 200, however, the height of the rear portion of the air distributor 200 may also be kept equal or substantially higher than the height of the front portion of the air distributor 200.

In one or more embodiments, the first opening 202 of the air distributor 200 may have a profile comprising one or more of oval-shaped, semi-circular-shaped, rectangular-shaped, square-shaped, inverted-U shaped, parabolic-shaped, but is not limited to the like. Further, the profile of the bottom opening 204 of the air distributor 200 may be concurrent to the profile of the opening provided on the truck wing 110 such that upon attachment of the air distributor 200 over the opening of the truck wing 110 the ambient air may be directed toward the TRU 112 or supplied into the gap 108 only through the air distributor 200 and rest area of the gap 108 remains enclosed by the truck wings 110.

In one or more embodiments, the truck wings 110 may be panels, made of high-impact metal sheets, alloys, reinforced composites, and the like. At least one side of the truck wings 110 may be movably attached to the rear side of the truck 102 and/or the front side of the trailer 104. The truck wings 110 in the deployed position may create a continuous connection between the truck 102 and trailer 104 so that air flows smoothly over the entire length of the truck 102. Further, when the vehicle 100 slows down, the truck wings 110 may automatically return to the collapsed position without driver intervention, where the truck wings 110 may retract, providing the necessary clearance while the vehicle 100 turns at any angle to facilitate the maneuverability of the vehicle 100. In some embodiments, the truck wings 110 may be retractable sheet metal that may remain connected and extend between the rear side of the truck 102 and/or the front side of the trailer 104 irrespective of the speed or motion of the vehicle 100, thereby creating a continuous connection between the truck 102 and trailer 104. When the vehicle 100 turns at any angle, the truck wing 110 on the turning side of the vehicle 100 may automatically retract, and the truck wing 110 on the opposite side may expand without driver intervention, thereby facilitating the maneuverability of the vehicle 100 while maintaining a continuous connection between the truck 102 and trailer 104.

Further described herein is a method for diverting and distributing ambient air towards an air inlet area of a heat exchanger 114 associated with a transport refrigeration unit (TRU) installed in a goods transportation vehicle 100. The method may involve the vehicle 100 of FIGs. 1A and 1B where a trailer 104 may be coupled to the rear side of the truck 102, with the TRU 112 installed on the trailer 104 and/or truck 102, a gap 108 provided between the truck 102 and the trailer 104 to facilitate the maneuverability of the vehicle 100 and further providing a space for installing the TRU 112 and several other components of the vehicle 100, and truck wings 110 movably configured along the top region and two lateral side regions of the gap 108 to enclose the gap 108.

The method may include steps of providing an air distributor 200 that may include at least one first (front) opening 202 at the front side, an internal cavity or channel enclosed by a housing, and at least one second (bottom) 204 opening at the bottom side of the housing, where the internal cavity may fluidically connect the front opening 202 to the bottom opening 204 of the air distributor 200. The method may further include steps of providing or creating an opening or cut-out section on the truck wing 110 which may have a profile concurrent to the profile of the bottom opening 204 of the air distributor 200.

The method may include steps of attaching the air distributor 200 at a predetermined position on the truck wing(s) 110 associated with the vehicle 100, such that the air distributor 200 may fluidically connect the air inlet area (face) of the heat exchanger 114 to the ambient air. Upon attachment of the air distributor 200 over the truck wing 110, the ambient air may enter the air distributor 200 via the front opening 202, the internal cavity, and the second opening 204 of the air distributor 200 may further direct the ambient air toward the face of the TRU 112 or supply into the gap 108 via the opening of the truck wing 110, however, the rest of the area of the gap 108 between the trailer 104 and truck 102 remains enclosed by the truck wings 110.

In one or more embodiments, the method may comprise the step of attaching the air distributor 200 to an exterior surface of the top truck wing 110-1 of the vehicle 100 as shown in FIG. 1A and 1B. In some embodiments, (not shown) the method may comprise the step of attaching the air distributor 200 to an exterior surface of the two side truck wings 110-2 of the vehicle 100.

Thus, this invention overcomes the above-mentioned drawbacks, and limitations associated with goods transportation vehicles, by providing a simple, efficient, and cost-effective solution in form of the air distributor that may be easily installed over the truck wing(s) of the vehicle to direct and distribute ambient air to the face of the heat exchanger of the TRU, without affecting the aerodynamics provided by the truck wings. Accordingly, the heat exchanger of the TRU may be supplied with cool and fresh ambient air to keep the TRU operational and maintain a user-defined environment within the storage area of the trailer. Moreover, the truck wings may improve the vehicle's stability at high speed and also improve fuel efficiency by reducing air drag.

While the invention has been described with reference to exemplary embodiments, it will be understood by those skilled in the art that various changes may be made and equivalents may be substituted for elements thereof without departing from the scope of the invention as defined by the appended claims. Modifications may be made to adopt a particular situation or material to the teachings of the invention without departing from the scope thereof. Therefore, it is intended that the invention not be limited to the particular embodiment disclosed, but that the invention includes all embodiments falling within the scope of the invention as defined by the appended claims.

In interpreting the specification, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced. Where the specification claims refer to at least one of something selected from the group consisting of A, B, C ....and N, the text should be interpreted as requiring only one element from the group, not A plus N, or B plus N, etc.

## Claims

1. An air distributor (200) for a transport refrigeration unit, TRU, (112) associated with a vehicle (100), the air distributor comprising:
a housing defining a shape of the air distributor, the air distributor adapted to be removably or fixedly attached at a predetermined position on one or more truck wings (110) associated with the vehicle such that the air distributor facilitates inflow of ambient air therewithin and directs the ambient air towards an air inlet area of a heat exchanger (114) associated with the TRU (112).

2. The air distributor of claim 1, wherein the air distributor (200) comprises at least one first opening (202) at a front side, and an internal cavity enclosed by the housing such that upon attachment of the air distributor on the corresponding truck wing (110), the internal cavity fluidically connects the at least one first opening (202) to the air inlet area of the heat exchanger (114),
and optionally wherein the air distributor (200) comprises at least one second opening (204) at a bottom side of the housing, the at least one second opening is fluidically connected to the at least one first opening (202) by the internal cavity such that upon attachment of the air distributor on the corresponding truck wing (110), the at least one second opening (204) fluidically connects the air distributor (200) to the air inlet area of the heat exchanger (114).

3. The air distributor of any preceding claim, wherein the vehicle (100) comprises a truck (102), and a trailer (104) attached to a rear side of the truck such that a gap (108) remains therebetween, wherein the heat exchanger (114) is installed at a front side of the trailer (104) in the gap (108).

4. The air distributor of any preceding claim, wherein the one or more truck wings (110) comprises a top truck wing (110-1) movably configured over a top region of the gap (108), and two side truck wings (110-2) movably configured on two opposite lateral side regions of the gap (108).

5. The air distributor of any preceding claim, wherein the air distributor (200) is adapted to be attached to an exterior surface of the top truck wing (110-1) of the vehicle (100),
and/or wherein the air distributor (200) is adapted to be attached to an exterior surface of the two side truck wings (110-2) of the vehicle (100).

6. The air distributor of any preceding claim, wherein a width of a rear side of the air distributor (200) is substantially larger than a width of a front part of the air distributor,
and/or wherein a height of a rear side of the air distributor (200) is substantially lower than a height of a front part of the air distributor.

7. The air distributor of any preceding claim, wherein the bottom side of the air distributor (200) comprises one or more coupling elements to facilitate attachment of the air distributor on the one or more truck wings (110).

8. The air distributor of any preceding claim, wherein the first opening (202) of the air distributor (200) has a predefined profile comprising one or more of oval-shaped, semi-circular-shaped, rectangular-shaped, square-shaped, inverted-U shaped, and parabolic-shaped.

9. A vehicle (100) equipped with a transport refrigeration unit, TRU, (112), the vehicle comprising:
a truck (102), and a trailer (104) attached to a rear side of the truck such that a gap (108) remains therebetween, wherein a heat exchanger (114) associated with the TRU is installed at a front side of the trailer (104) within the gap (108);
one or more truck wings (110) movably configured at a top region, and two lateral side regions of the gap (108); and
an air distributor (200) as claimed in claim 1 which is removably or fixedly attached at a predetermined position on the one or more truck wings (110), wherein the air distributor (200) is adapted to facilitate inflow of ambient air therewithin and direct the ambient air towards an air inlet area of the heat exchanger (114).

10. The vehicle of claim 9, wherein the air distributor (200) comprises at least one first opening (202) at a front side, and an internal cavity enclosed by a housing such that upon attachment of the air distributor on the corresponding truck wing (110), the internal cavity fluidically connects the at least one first opening (202) to the air inlet area of the heat exchanger (114),
and optionally wherein the air distributor comprises at least one second opening (204) at a bottom side of the housing, the at least one second opening is fluidically connected to the at least one first opening (202) by the internal cavity such that upon attachment of the air distributor (200) on the corresponding truck wing (110), the at least one second opening (204) fluidically connects the air distributor to the air inlet area of the heat exchanger (114).

11. The vehicle of claim 9 or 10, wherein the one or more truck wings (110) comprises a top truck wing (110-1) movably configured at the top region of the gap (108), and two side truck wings (110-2) movably configured at the two opposite lateral side regions of the gap (108),
and/or wherein the one or more truck wings (110) are configured to move between a deployed position where the one or more truck wings enclose the gap (108), and a collapsed position where the gap (108) is at least partially exposed.

12. The vehicle of any of claims 9 to 11, wherein the heat exchanger (114) is installed in middle of the front side of the trailer (104) within the gap (108).

13. The vehicle of claim any of claims 9 to 12, wherein the air distributor (200) is attached to an exterior surface of the top truck wing (110-1) of the vehicle (100),
and/or wherein the air distributor (200) is attached to an exterior surface of the two side truck wings (110-2) of the vehicle (100).

14. A method for diverting and distributing ambient air towards an air inlet area of a heat exchanger (114) associated with a transport refrigeration unit (112) installed in a vehicle (100), the method comprising the steps of:
attaching an air distributor (200) at a predetermined position on one or more truck wings (110) associated with the vehicle;
wherein the air distributor (200) comprises at least one first opening (202) at a front side, and an internal cavity enclosed by a housing such that upon attachment of the air distributor on the corresponding truck wing, the internal cavity fluidically connects the air inlet area of the heat exchanger (114) to ambient.

15. The method of claim 14, wherein the method comprises the step of attaching the air distributor to an exterior surface of a top truck wing (110-1) of the vehicle (100),
and/or wherein the method comprises the step of attaching the air distributor to an exterior surface of two side truck wings (110-2) of the vehicle (100).
